# EUROPEAN PATENT APPLICATION

(11) **EP 2 202 546 A1**
(43) Date of publication of application: **30.06.2010**
(21) Application number: 08837329.5
(22) Date of filing: 18.09.2008
(51) Int. Cl.: G02B 5/30, G02F 1/13363, G02F 1/1337

(54) **METHOD FOR PRODUCING OPTICAL FILM**

(30) Priority: 10.10.2007 JP 2007264355
(71) Applicant: Nippon Oil Corporation, Tokyo 105-8412 (JP)
(72) Inventor: HIRAI, Tomoo, Yokohama-shi Kanagawa 231-0815 (JP); SUZAKI, Gorou, Yokohama-shi Kanagawa 231-0815 (JP)
(74) Representative: Grünecker, Kinkeldey, Stockmair & Schwanhäusser Anwaltssozietät
(86) International application number: PCT/JP2008/067369
(87) International publication number: WO 2009/047985

(57) **Abstract**

The present invention provides a method for manufacturing an optical film using an alignment film capable of forming a homeotropically aligned liquid crystal layer at ease and enabling the layer to transfer to other members at ease. The method is **characterized by** using an alignment film comprising at least a polyvinyl alcohol with a saponification degree of 75 to 90 percent.

## Description

### [Field of the Invention]

The present invention relates to methods for manufacturing optical films useful in the fields of liquid crystal display devices, optics, optoelectronics, and the like.

### [Background of the Invention]

A liquid crystal film comprising a film material formed from a liquid crystal substance is useful as an optical film for liquid crystal display devices or the like. Recently, the quality standards required for the liquid crystal film have become stricter ever than before in connection with development of more highly defined display devices.

In addition to conventional driving modes of liquid crystal display devices such as TN- and STN-modes, modes that are improved in response speed and viewing angle, such as OCB (optically compensated bend) mode, VA (vertical alignment) mode, and IPS (in-plane switching) mode have been put in practical use. As the result, it has been demanded to provide optical films (retardation films) suitable for such various driving modes. Examples of such retardation films include films produced by stretching uniaxially or biaxially transparent plastic films and liquid crystalline films produced by aligning liquid crystalline compounds.

Liquid crystalline films have received attention because they can be produced in various aligned forms by selecting production conditions and can be formed into thin films.

As an example, a liquid crystalline film may be produced by a method wherein a film of liquid crystalline substance is formed over an alignment substrate to be aligned and fixed in a liquid crystal state. The alignment substrate is generally a substrate having been subjected to a rubbing treatment. The rubbing treatment may be carried out by contacting a roller having a cloth (rubbing cloth) wrapped therearound with a substrate running thereunder to be rubbed. For example, methods are known wherein a substrate having an alignment film formed thereon is subjected to a rubbing treatment (Patent Document Nos. 1 and 2).

Polyvinyl alcohols (PVA) and polyimides are known as organic materials suitable for use as an alignment film coated over a substrate. Many improvements in these materials have been reported. For example, with regard to PVAs, methods are known wherein a PVA is chemically modified to adjust its alignability for a liquid crystal material (Patent Document Nos. 3 and 4) .

The alignment forms of liquid crystal are broadly classified into a homogeneous alignment wherein liquid crystal molecules are aligned in parallel to a substrate surface and a homeotropic alignment wherein liquid crystal molecules are aligned vertically with respect to a substrate surface. Various materials for achieving each alignment mode are also known (Non-Patent Document No. 1).

It is known that the preferable aligned form of a liquid crystal film suitable for the above-described VA mode or IPA mode is the homeotropic alignment and methods for achieving the alignment are also known (Patent Document Nos. 5 and 6).

In these methods, however, it is common to use compositions containing some specific compounds for imparting a vertical aligning function to a liquid crystalline compound or well-known specific alignment film materials having a homeotropic aligning function.

Although these methods are excellent for aligning a liquid crystalline compound (composition) homeotropically, it is often difficult to transfer the liquid crystal layer to another member, depending on the chemical structure of the compound (composition) or the type of alignment film material, due to strong adhesion between the liquid crystal layer formed and the alignment film or substrate. Therefore, these methods may not be sufficient in versatility and have been required to be further improved.
(1) Patent Document 1: Japanese Patent Application Laid-Open Publication No. 08-152515
(2) Patent Document 2: Japanese Patent Application Laid-Open Publication No. 08-160429
(3) Patent Document 3: Japanese Patent Application Laid-Open Publication No. 08-338913
(4) Patent Document 4: Japanese Patent Application Laid-Open Publication No. 2002-062427
(5) Patent Document 5: Japanese Patent Application Laid-Open Publication No. 2006-301605
(6) Patent Document 6: Japanese Patent Application Laid-Open Publication No. 2006-267625
(7) Non-Patent Document 1: "Ekisho No Kiso to Oyo " Chapter 5, published by Kogyo Chosakai Publishing, Inc. on November 15, 1996

### [Disclosure of the Invention]

The present invention provides a method for manufacturing an optical film using an alignment film that is a specific polyvinyl alcohol (PVA) that is excellent in homeotropic alignability and allows the optical film to be transferred to another member at ease.

As the result of extensive research and study by the inventors, the present invention was accomplished on the basis of the finding that the use of a specific PVA was able to solve the above-described problems.

The means of solving the problems are as follows:
[1] a method for manufacturing an optical film comprising the steps of:
   forming an alignment film over a substrate; and
   forming over the alignment film a liquid crystal layer fixed in a homeotropic alignment,
   the alignment film comprising at least a polyvinyl alcohol with a saponification degree of 75 to 90 percent;
[2] the method for manufacturing an optical film according to [1], further comprising the step of transferring the liquid crystal layer on another substrate;
[3] the method for manufacturing an optical film according to [1] or [2], wherein the alignment film comprises a polyvinyl alcohol with a saponification degree of 75 to 90 percent and a polyvinyl alcohol with a saponification degree of 90 or higher, mixed at a ratio of 0.1:9.9 to 10:0;
[4] the method for manufacturing an optical film according to any of [1] to [3], wherein the average polymerization degree of the polyvinyl alcohol is from 300 to 3000;
[5] the method for manufacturing an optical film according to any of [1] to [4], wherein the substrate over which the alignment film is formed is a plastic film;
[6] an optical film manufactured by the method according to any one of [1] to [5]; and
[7] a liquid crystal display device equipped with the optical film according to [6].

### [Effects of the Invention]

According to the present invention, the use of an easily available PVA with a specific saponification degree as an alignment film enables a liquid crystal layer formed thereon to exhibit easily a homeotropic alignment and the homeotropically aligned liquid crystal layer to be transferred easily thereby restraining the development of defects (defects in transfer or crack of the liquid crystal layer) accompanied with transfer. Therefore, the resulting optical film has excellent optical qualities.

### [Best Mode of Carrying out the Invention]

The present invention will be described in more detail below.

The alignment film used in the present invention comprises at least a PVA with a saponification degree of 75 to 90 percent, preferably 80 to 90 percent. A saponification degree of less than 75 percent is not preferable because the resulting film would be likely to absorb moisture, possibly causing a trouble in aligning a liquid crystal layer and would be reduced in wear resistance. A saponification degree of higher than 90 percent is not also preferable because the resulting film would be poor in homeotropic alignability in a liquid crystal layer and in transferability (releasability) of a liquid crystal layer from the alignment substrate to a different substrate.

The alignment film used in the present invention comprises a PVA with a saponification degree of 75 to 90 percent and if necessary the PVA may be mixed with a PVA with a saponification degree of 95 percent or higher, preferably 98 percent or higher, particularly preferably 99 percent or greater. A PVA with a saponification degree of 75 to 90 percent has a function to align homeotropically a liquid crystal layer while a PVA with a saponification degree of 95 percent or higher has a function to keep the film strength higher.

The mix ratio by mass of a PVA with a saponification degree of 75 to 90 percent and a PVA with a saponification degree of 95 percent or higher is 0.1:9.9 to 10:0, preferably 0.5:9.5 to 10:0, particularly preferably 1:9 to 10:0. A ratio of the PVA with a saponification degree of 75 to 90 percent of less than 0.1:9.9 is not preferable because the resulting alignment film would be poor in homeotropic alignability for a liquid crystal layer and in transferability (releasability) of a liquid crystal layer from the alignment substrate to a different substrate.

The PVA used in the present invention has a polymerization degree of usually 300 to 3000, preferably 500 to 2500. A PVA with a polymerization degree out of these ranges is not preferable because the resulting alignment film would lack in wear resistance or would yield gel-like residue due to low solubility during preparation of the PVA solution.

There is no particular restriction on the arrangement of the hydroxyl group unit and acetyl group unit in the PVA used in the present invention, which may, therefore, be distributed at random or in a block style. Further, the PVA used in the present invention may be a modified PVA containing also structural units other than the hydroxyl group unit and acetyl group unit in addition thereto. Examples of such structural units other than the hydroxyl group unit and acetyl group unit include those having a hydrocarbon group, a carbonyl group or a carboxyl group. Examples of the structural unit having a hydrocarbon group include those the main chain terminal end of which is alkylthio-modified and those of which hydroxyl group is connected via an ester, ether, or acetal bond to a structure having a hydrocarbon group.

There is no particular restriction on a solvent for preparing a PVA solution as long as it can dissolve PVA. Although water is used as an ordinary solvent, a lower alcohol such as methanol, ethanol, or isopropyl alcohol or a mixture thereof may also be used. The solvent may be heated to facilitate dissolution of the PVA.

The water used to dissolve PVA is not preferably water containing a large amount of (polyvalent) metal ion and is preferably ion exchanged water, more preferably water with an electric conductivity of 10 µS/cm or lower. The water containing (polyvalent) metal ion is not preferable because it may react with PVA and thus may produce insoluble compounds.

The total PVA concentration of the PVA solution is usually from 1 to 10 percent by mass although the preferable concentration depends on the intended film thickness.

The PVA solution may be blended with additives that do not adversely affect coating or alignment for a liquid crystal layer, such as surfactants, deforming agents, or leveling agents. In order to strengthen the PVA film, cross-linkers such as aldehydes, dialdehydes, dialdehyde starches, methylol compounds, boric acid and borax may be added to the solution. Depending on purposes, other polymers or compounds may be added.

A method for forming an alignment film will be described.

There is no particular restriction on the coating method used to form an alignment film on a substrate. Examples of a coating method for an alignment film particularly with a large area include flexographic printing using a soft resin plate, dispensing, gravure coating, microgravure, screen printing, lip coating and die coating methods. Among these methods, preferred are gravure coating, lip coating and die coating methods.

Examples of a substrate on which an alignment film is formed include plastic films such as polyimide, polyphenylene sulfide, polyphenylene oxide, polyetheretherketone, polyether sulfone, polyethylene naphthalate, polyethylene terephthalate, polyarylate, triacetyl cellulose, and poly(cycloolefin). These substrates may be stretched uniaxially or biaxially or may be subjected to a surface treatment to be easily adhesive or easily releasable.

The substrate produced in this manner may be used as an alignment film as it is and may be subjected to a rubbing treatment if necessary.

The rubbing treatment is a treatment wherein rubbing is advanced at a predetermined angle, preferably 0 to ±45 degrees with respect to the longitudinal direction of an elongate film (hereinafter referred to as "MD"). With regard to this angle (rubbing angle), an angle in a clockwise direction from MD when the rubbed surface is viewed from above is defined as a positive angle.

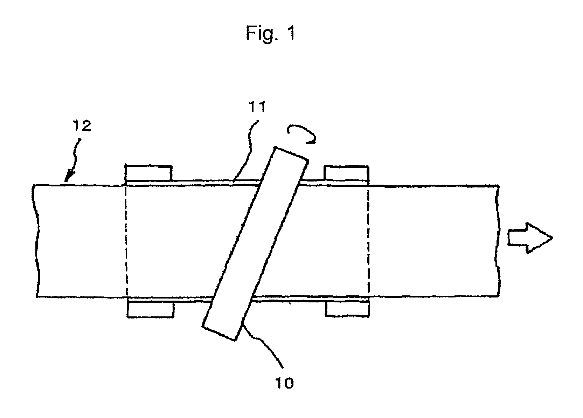

The rubbing treatment may be carried out by any conventional method. An example will be described with reference to Fig. 1. An elongate film (12) that will be an alignment substrate is fed onto a stage (11) conveying the film (12) in MD, and a rubbing roller (10) is arranged above the stage at a selected angle with respect to MD. The rubbing roller (10) is rotated while the elongate film (12) is conveyed under the roller, thereby rubbing a surface of the film (12). The angle defined by the rubbing roller (10) and the moving direction of the film on the stage (11) can be freely adjusted. On the surface of the robbing roller is attached a rubbing cloth made of fiber of cotton, polyester or rayon.

During the rubbing treatment, it is important to rub the alignment film surface in a fixed direction taking into account of the hardness of the alignment substrate surface. In view of this, the rubbing pressure and revolution number of the rubbing roller are properly selected. Usually, the alignment substrate is transferred at a speed of 0.5 to 100 m/minute, preferably 1 to 30 m/minute, and the revolution number of the rubbing roller is selected within the range of 0 to 1000, preferably 0 to 200 in terms of peripheral velocity ratio. The rubbing pressure may be such that the rubbing cloth surface slightly contacts on the substrate surface, and thus may be such that the bristle tips of the rubbing cloth are pushed into the substrate surface at a depth of 100 to 5000 µm, preferably 100 to 2000 µm. If necessary, the rubbed surface may be subjected to a cleaning treatment by blowing pressurized fluid or contacting the surface with an adhesive roller.

Materials used in the present invention to form a homeotropically aligned liquid crystal layer are preferably those containing a liquid crystalline compound (liquid crystalline compositions). As long as the compositions exhibit liquid crystallinity, all of the components thereof do not necessarily exhibit liquid crystallinity.

The components constituting the liquid crystalline composition are low molecular weight liquid crystalline compounds or polymeric liquid crystalline compounds regardless of whether they have a reactive group but are preferably polymeric liquid crystalline compounds, more preferably those having a reactive group.

The form of liquid crystalline molecule may be rod or disc but is preferably rod.

The composition may be blended with non-liquid crystalline polymeric compounds that are miscible with the above-described low molecular weight liquid crystalline compound or polymeric liquid crystalline compound, various activating agents and additives such as surfactants, leveling agents, deforming agents, anti-oxidants, dyes, and pigments to an extent not to deviate the scope of the present invention.

Examples of the above-described low molecular weight liquid crystalline compound include those containing a polymerizable group such as a vinyl, (meth)acryloyl, vinyloxy, oxiranyl, and oxetanyl group.

The above-described polymeric liquid crystalline compounds are broadly classified into those of main chain type and those of side chain type.

Examples of the main chain type polymeric liquid crystalline compound include polyesters, polyesteramides, polyamides and polycarbonates, all of which exhibit liquid crystallinity. Amongst, in view of easy synthesis, alignability and glass transition temperature, liquid crystalline polyesters are preferable, and main chain type liquid crystalline polyesters to which a cationically polymerizable group is bonded are particularly preferable.

The main chain type liquid crystalline polyester comprises at least two essential units selected from aromatic diol units (hereinafter referred to as "Structural Unit (A)"), aromatic dicarboxylic acid units (hereinafter referred to as "Structural Unit (B)"), and aromatic hydroxycarboxylic acid units (hereinafter referred to as "Structural Unit (C)"), and contains a structural unit having a cationically polymerizable group in at least one of the terminal ends of the main chain contains. Structural units (A), (B) and (C) will be described in turn below.

Compounds to be used for introducing Structural Unit (A) are preferably those represented by formula
(a) below, specifically catechol, resorcin, hydroquinone, substituents thereof, 4,4'-biphenol, 2,2',6,6'-tetramethyl-4,4'-biphenol, and 2,6-naphthalene diol, particularly preferably catechol, resorcin, and hydroquinone: 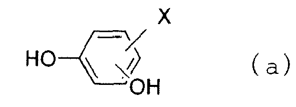 wherein -X is selected from the following groups: -H, -CH₃, -C₂H₅, -CH₂CH₂CH₃, -CH(CH₃)₂, -CH₂CH₂CH₂CH₃, -CH₂CH(CH₃)CH₃, -CH(CH₃)CH₂CH₃, -C(CH₃)₃, -OCH₃, -OC₂H₅, -OC₆H₅, -OCH₂C₆H₅, -F, -Cl, -Br, -NO₂ and -CN.
   Particularly preferred are compounds represented by the following formula :

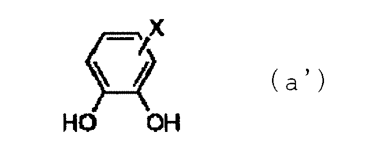

Compounds to be used for introducing Structural Unit (B) are preferably those represented by formula (b) below, specifically terephthalic acid, isophthalic acid, phthalic acid, substituents thereof, 4,4'-stilbenedicarboxylic acid and substituents thereof, 2,6-naphthalenedicarboxylic acid, and 4,4'-biphenyldicarboxylic acid, particularly preferably terephthalic acid, isophthalic acid, phthalic acid, and substituents thereof: 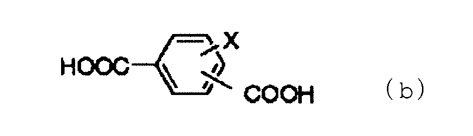 wherein -X is selected from the following groups: -H, -CH₃, -C₂H₅, -CH₂CH₂CH₃, -CH(CH₃)₂, -CH₂CH₂CH₂CH₃, -CH₂CH(CH₃)CH₃, -CH(CH₃)CH₂CH₃, -C(CH₃)₃, -OCH₃, -OC₂H₅, -OC₆H₅, -OCH₂C₆H₅, -F, -Cl, -Br, -NO₂ and -CN.

Compounds to be used for introducing Structural Unit (C) are preferably those represented by formula (c) below, specifically hydroxybenzoic acid and substituents thereof,
4'-hydroxy-4-biphenylcarboxylicacidandsubstituents thereof, 4'-hydroxy-4-stilbenecarboxylic acid and substituents thereof, 6-hydroxy-2-naphthoic acid, and 4-hydroxycinnamic acid, particularly preferably hydroxybenzoic acid and substituents thereof, 4'-hydroxy-4-biphenylcarboxylicacidandsubstituents thereof, and 4'-hydroxy-4-stilbenecarboxylic acid and substituents thereof: 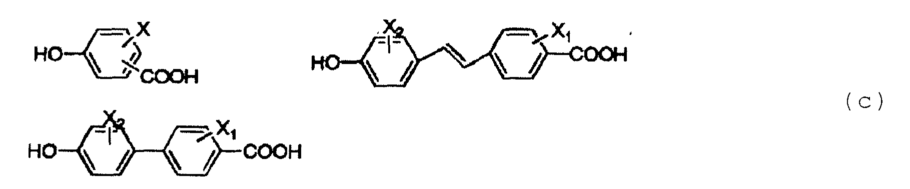 wherein -X, -X₁, and -X₂ are each selected from -H, -CH₃, -C₂H₅, -CH₂CH₂CH₃, -CH(CH₃)₂, -CH₂CH₂CH₂CH₃, -CH₂CH(CH₃)CH₃, -CH(CH₃)CH₂CH₃, -C(CH₃)₃, -OCH₃, -OC₂H₅, -OC₆H₅, -OCH₂C₆H₅, -F, -Cl, -Br, -NO₂, and -CN.

The main chain type liquid crystalline polyester may be any compound as long as it comprises at least two essential units selected from aromatic diol units (A), aromatic dicarboxylic acid units (B), and aromatic hydroxycarboxylic acid units (C), and preferably a structural unit having a cationically polymerizable group (hereinafter referred to as "Structural Unit (D)") in at least one of the terminal ends of the main chain, and exhibit a thermotropic liquid crystallinity. Therefore, there is no particular limitation on other structural units as long as they can meet these requirements.

The proportion of Structural Units (A), (B), and (C) in all the structural units constituting the main chain type liquid crystalline polyester is generally from 20 to 99 percent, preferably from 30 to 95 percent, particularly preferably from 40 to 90 percent when Structural Units (A), (B), and (C) are indicated by a ratio of the total weight of diol, dicarboxylic acid, or hydroxycarboxylic acid in the amount of all monomers to be charged. The proportions of less than 20 percent would narrow the temperature range at which liquid crystallinity is exhibited, while those of more than 99 percent would cause the formation of a relatively few units having a cationically polymerizable group essential for the main chain type liquid crystalline polyester, resulting in a failure to the enhancement of the alignment-retaining capability and mechanical strength.

Next, Structural Unit (D) having a cationically polymerizable group will be described. The cationically polymerizable group is preferably a functional group selected from the group consisting of oxiranyl, oxetanyl, and vinyloxy groups, particularly preferably oxetanyl group. Compounds to be used for introducing Structural Unit (D) are aromatic compounds having a phenolic hydroxyl group or a carboxylic acid group to which a cationically polymerizable functional group selected from epoxy, oxetanyl, and vinyloxy groups are bonded, as represented by the formulas given below. The compounds may have a suitable spacer between the aromatic ring and the cationically polymerizable group. 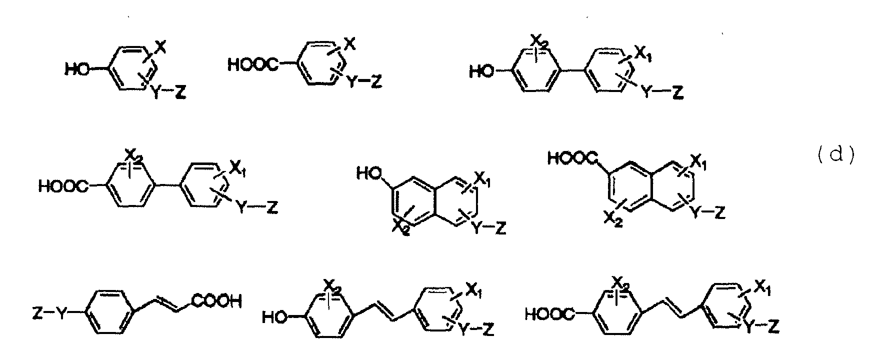 wherein -X, -X₁, -X₂, -Y, and -Z are each selected from the following groups as per structural unit:
(1) -X, -X₁, "X₂ : -H, -CH₃, -C₂H₅, -CH₂CH₂CH₃, -CH(CH₃)₂, -CH₂CH₂CH₂CH₃, -CH₂CH(CH₃)CH₃, -CH(CH₃)CH₂CH₃, -C(CH₃)₃, -OCH₃, -OC₂H₅, -OC₆H₅, -OCH₂C₆H₅, -F, -Cl, -Br, -NO₂ and -CN;
(2) -Y : single bond, -(CH₂)ₙ-, -O-, -O-(CH₂)ₙ-, -(CH₂)ₙ-O-, -O-(CH₂)ₙ-O-, -O-CO-, -CO-O-, -O-CO-(CH₂)ₙ-, -CO-O-(CH₂)ₙ-, -(CH₂)ₙ-O-CO-, -(CH₂)ₙ-CO-O-, -O-(CH₂)ₙ-O-CO-, -O-(CH₂)ₙ-CO-O-, -O-CO-(CH₂)ₙ-O-, -CO-O-(CH₂)ₙ-O-, -O-CO-(CH₂)ₙ-O-CO-, -O-CO-(CH₂)ₙ-CO-O-, -CO-O-(CH₂)ₙ-O-CO- or -CO-O-(CH₂)ₙ-CO-O- (n is an integer of from 1 to 12); and
(3)-Z:

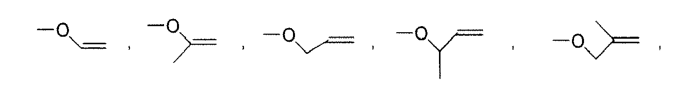

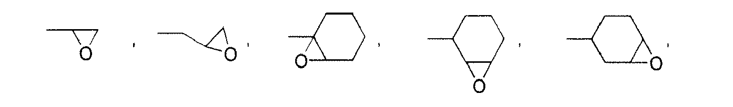

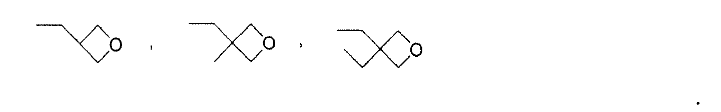

In Structural Unit (D), a cationically polymerizable group or a substituent containing the same and a phenolic hydroxyl group or a carboxylic group are preferably bonded at 1,4-position when the main chain to which they bond is a benzene ring, at 2,6-position when the main chain to which they bond is a naphthalene ring, and at 4, 4' -position when the main chain to which they bond is a biphenyl or stilbene main chain with the objective of excellent liquid crystallinity. More specifically, preferred are 4-vinyloxybenzoic acid, 4-vinyloxyphenol, 4-vinyloxyethoxybenzoic acid, 4-vinyloxyethoxyphenol, 4-glycidyloxybenzoic acid, 4-glycidyloxyphenol, 4-(oxetanylmethoxy)benzoic acid, 4-(oxetanylmethoxy)phenol, 4'-vinyloxy-4-biphenylcarboxylic acid, 4'-vinyloxy-4-hydroxybiphenyl, 4'-vinyloxyethoxy-4-biphenylcarboxylic acid, 4'-vinyloxyethoxy-4-hydroxybiphenyl, 4'-glycidyloxy-4-biphenylcarboxylic acid, 4'-glycidyloxy-4-hydroxybiphenyl, 4'-oxetanylmethoxy-4-biphenylcarboxylic acid, 4'-oxetanylmethoxy-4-hydroxybiphenyl, 6-vinyloxy-2-naphthalenecarboxylic acid, 6-vinyloxy-2-hydroxynaphthalene, 6-vinyloxyethoxy-2-naphthalenecarboxylic acid, 6-vinyloxyethoxy-2-hydroxynaphthalene, 6-glycidyloxy-2-naphthalenecarboxylic acid, 6-glycidyloxy-2-hydroxynaphthalene, 6-oxetanylmethoxy-2-naphthalenecarboxylic acid, 6-oxetanylmethoxy-2-hydroxynaphthalene, 4-vinyloxycinnamic acid, 4-vinyloxyethoxycinnamic acid, 4-glycidyloxycinnamic acid, 4-oxetanylmethoxycinnaimic acid, 4'-vinyloxy-4-stilbenecarboxylic acid, 4'-vinyloxy-3'-methoxy-4-stilbenecarboxylic acid, 4'-vinyloxy-4-hydroxystilbene, 4'-vinyloxyethoxy-4-stilbenecarboxylic acid, 4'-vinyloxyethoxy-3'-methoxy-4-stilbenecarboxylic acid, 4'-vinyloxyethoxy-4-hydroxystilbene, 4'-glycidyloxy-4-stilbenecarboxylic acid, 4'-glycidyloxy-3'-methoxy-4-stilbenecarboxylic acid, 4'-glycidyloxy-4-hydroxystilbene, 4'-oxetanylmethoxy-4-stilbenecarboxylic acid, 4'-oxetanylmethoxy-3'-methoxy-4-stilbenecarboxylic acid, and 4'-oxetanylmethoxy-4-hydroxystilbene.

In the main chain type liquid crystalline polyester of the present invention, the proportion of Structural Unit (D) in all the structural units is generally from 1 to 60 percent, preferably from 5 to 50 percent, when Structural Unit (D) is indicated by a ratio of the total weight of carboxylic acid or phenol in the amount of all monomers to be charged. The proportions of less than 1 percent would cause a failure to the enhancement of the alignment-retaining capability and mechanical strength of the polyester, while those of more than 60 percent would increase the crystallinity of the polyester and thus reduce the temperature range at which liquid crystallinity is exhibited.

Each of Structural Units (A) through (D) has one or two carboxylic or phenolic hydroxyl groups. It is desirous that the equivalent number of the carboxylic group and those of the hydroxyl group bonded to all the monomers (A) through (D) to be charged are almost equal. That is, in the case where Structural Unit (D) has a free carboxylic group, it is desirous that the relation represented by the following equation "(mole number of (A) x 2) = (mol number of (B) x 2) + (mol number of (D))" be almost fulfilled. In the case where Structural Unit (D) has a free phenolic hydroxyl group, it is desirous that the relation represented by the following equation "(mole number of (A) x 2) + (mol number of (D)) = (mol number of (B) x 2)" be almost fulfilled. It is not preferable that the molar ratio of the units to be charged is significantly different from the above relations because the difference lead to occupation of the polymer-molecule terminals by the carboxylic acids, the phenols, or their derivatives, furthermore, and those acidic residue would cause polymerization or decomposition at stages other than those desired through the process.
The main chain type liquid crystalline polyester may contain structural units other than Structural Units (A) through (D). There is no particular restriction on such additional structural units which may, therefore, be any compounds (monomers) known in the art. For example, additional structural units may be those from naphthalene dicarboxylic acid, biphenyldicarboxylic acid, aliphatic dicarboxylic acid, compounds produced by introducing into these compounds halogen or alkyl, biphenol, naphthalene diol, aliphatic diol, and compounds obtained by introducing into these compounds halogen or alkyl.

The molecular weight of the main chain type liquid crystalline polyester expressed by η, inherent viscosity, is preferably from 0.03 to 0.50 dl/g, more preferably from 0.05 to 0.15 dl/g measured in a mixed solvent of phenol/tetrachloroethane (weight ratio: 60/40) at a temperature of 30°C. When η is smaller than 0.03 dl/g, the solution viscosity of the resulting main chain type liquid crystalline polyester would be too low to form a uniform coating film. When η is larger than 0.50 dl/g, the alignment processing temperature would be increased and both aligning and cross-linking may occur at the same time, which causes deterioration of liquid crystal alignment.

In the present invention, the molecular weight of the main chain type liquid crystalline polyester is controlled by the composition of the units to be charged. Specifically, the polymerization degree (average bond number of Structural Units (A) through (D)) of the resulting main chain type liquid crystalline polyester is determined by the relative content of mono-functional monomers, i.e., compounds for introducing Structural Unit (D), to the total structural units to be charged so as to inactivate both of reactive terminal ends of the polyester. Therefore, in order to produce a main chain type liquid crystalline polyester with a desired inherent viscosity, it is necessary to adjust the charging monomer formulation depending on the structures of monomers to be charged.

There is no particular restriction on the method for synthesizing the main chain type liquid crystalline polyester. Therefore, any method usually used to synthesize polyesters may be employed. For example, a method may be employed in which a carboxylic acid unit is activated in acid chloride or sulfonic acid anhydride and reacted with a phenol unit in the presence of a base (acid chloride method), in which a carboxylic acid unit and a phenol unit are directly condensed using a condensing agent such as DCC (dicyclohexylcarbodiimide), or in which a phenol unit is acetylated and acidolysis-polymerized, together with a carboxylic acid unit under molten conditions. However, since in the case of using acidolysis polymerization under molten conditions, there is a risk that the monomer unit having a cationically polymerizable group undergoes polymerization or decomposition unexpectedly under the reaction conditions, there frequently arises a necessity to control the reaction conditions strictly. Furthermore, under particular circumstances, it is desired to employ a method wherein a suitable protecting group is used or wherein after a compound having a different functional group is brought into a reaction, a cationically polymerizable group is introduced. Alternatively, the crude main chain type liquid crystalline polyester produced by polymerization may be purified by recrystallization and reprecipitation.

The resulting main chain type liquid crystalline polyester can be analyzed by means for analysis such as NMR (nuclear magnetic resonance method) to identify in what proportion each monomer is present in the main chain type liquid crystalline polyester. An average bond number of the main chain type liquid crystalline polyester can be calculated from the quantity ratio of the cationically polymerizable group.

In the present invention, other compounds may be blended with the main chain type liquid crystalline polyester having a cationically polymerizable group as long as they do not deviate the scope specified by the present invention. For example, such compounds include polymeric compounds and various low molecular weight compounds which are miscible with the main chain type liquid crystalline polyester used in the present invention. Such low molecular weight compounds may or may not have a liquid crystallinity and may or may not have a polymerizable group which is reactive with a cross-linkable main chain type liquid crystalline polyester. However, it is preferred to use liquid crystalline compounds having a polymerizable group such as those given below: 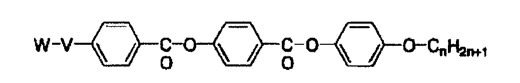 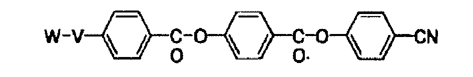 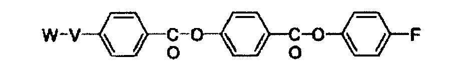 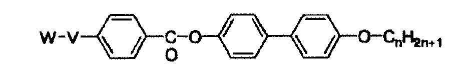 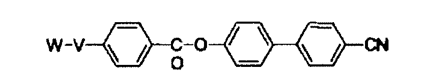 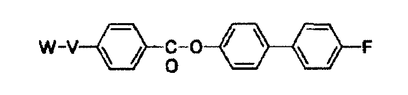 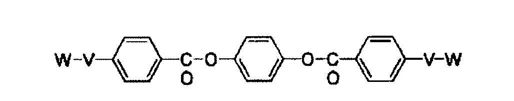 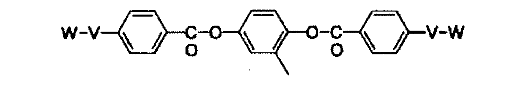 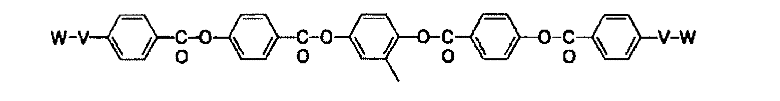 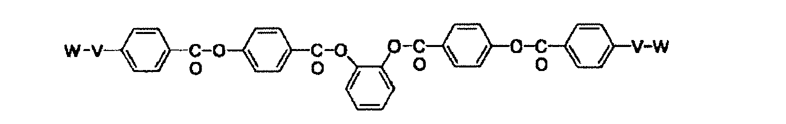 wherein n is an integer of from 2 to 12, and -V- and -W are each selected from the following groups:
- V-: single bond, -O-, and -O-CₘH₂ₘ-O-
wherein m is an integer of from 2 to 12; -W:

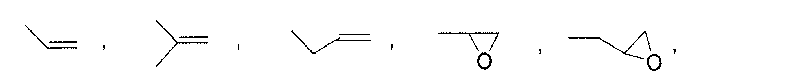

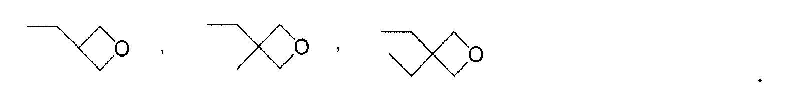

Examples of the side chain type liquid crystalline compound include poly(meth)acrylates, polymalonate, and polysiloxanes. Amongst, preferred are poly(meth)acrylates represented by the following formula :

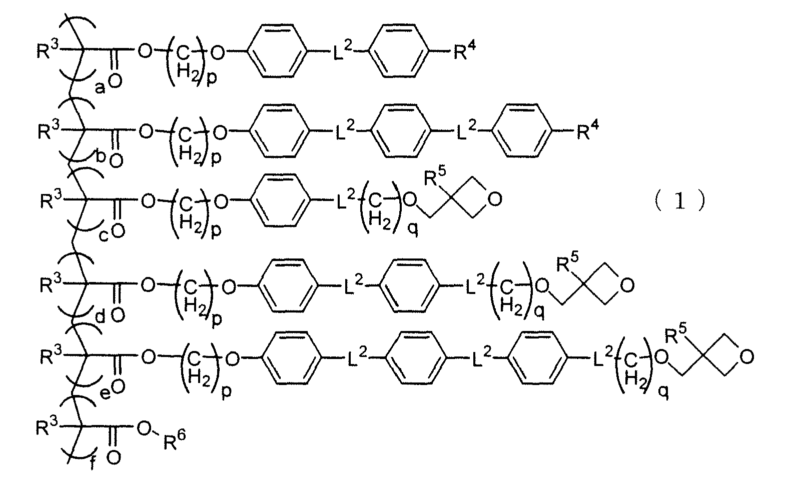

In formula (1), each R³ is hydrogen or methyl, each R⁴ is hydrogen, methyl, ethyl, butyl, pentyl, hexyl, octyl, nonyl, decyl, dodecyl, methoxy, ethoxy, propoxy, butoxy, pentyloxy, hexyloxy, heptyloxy, octyloxy, decyloxy, dodecyloxy, cyano, bromo, chloro, fluoro, or carboxyl, each R⁵ is hydrogen, methyl, or ethyl, R⁶ is a hydrocarbon group having 1 to 24 carbon atoms, each L² is a single bond, -O-, -O-CO-, -CO-O-, -CH=CH-, or -C≡C-, p is an integer of 1 to 10, q is an integer of 0 to 10, and a, b, c, d, e, and f are each a molar ratio of each unit in the polymer (a+b+c+d+e+f=1.0 provided that c+d+e≠0).

The molar ratio of each unit constituting the side chain polymeric liquid crystalline compound is necessarily defined by "a+b+c+d+e+f=1.0" provided that "c+d+e≠0" and the compound necessarily exhibits liquid crystallinity. The molar ratio of each unit may be arbitrarily selected as long as these requirements are satisfied but is preferably as follows:
a: preferably from 0 to 0.80, more preferably from 0.05 to 0.50;
b: preferably from 0 to 0.90, more preferably from 0.10 to 0.70;
c: preferably from 0 to 0.50, more preferably from 0.10 to 0.30;
d: preferably from 0 to 0.50, more preferably from 0.10 to 0.30
e: preferably from 0 to 0.50, more preferably from 0.10 to 0.30; and
f: preferably from 0 to 0.30, more preferably from 0.01 to 0.10.

All of the six poly(meth)acrylate components may not be used as long as the above molar ratio requirements are met.

R⁴ is preferably hydrogen, methyl, butyl, methoxy, cyano, bromo, or fluoro, particularly preferably hydrogen, methoxy, or cyano. L² is preferably a single bond, -O-, -O-CO- or -CO-O-. .R⁶ is preferably a hydrocarbon having 2, 3, 4, 5, 6, 7, 8, 10, 12 or 18 carbon atoms.

The side chain polymeric liquid crystalline compound, represented by formula(1), varies in birefringence index depending on the molar ratio of each of components a to f or its alignment form. The birefringence index of the compound is preferably from 0.001 to 0.300, more preferably from 0.05 to 0.25 if the compound is aligned nematically.

The (meth)acrylic compounds corresponding to the respective components of the side chain type polymeric liquid crystalline compound may be synthesized in accordance with any conventional method utilized in the field of organic chemistry. The (meth)acrylic compound having an oxetanyl group can be easily synthesized by a method similar to that for synthesizing compounds represented by formulas (7), (8), and (9) described below.

The side chain polymeric liquid crystalline compound may be synthesized at ease by radically or anionically copolymerizing the (meth)acrylic group of each (meth)acrylic compound corresponding to each of the components produced by the above-described method. There is no particular restriction on the conditions of polymerization. Therefore, conventional conditions may be employed.

As an example of the radical polymerization, a method may be used in which a (meth)acrylic compound is dissolved in a solvent such as DMF (dimethylformamide) or diethylene glycol dimethylether and reacted at a temperature of 60°C to 120°C for several hours using AIBN (2,2'-azobisisobutylonitrile) or BPO (benzoyl peroxide) as an initiator. Alternatively, in order to allow the liquid crystal phase to be stably exhibited there is an effective method in which living radical polymerization is conducted using an initiator such as a copper (I) bromide/2,2'-bipyridyl-based initiator or TENPO (a 2,2,6,6-tetramethylpiperidinyloxy free radical)-based initiator so as to control the molecular weight distribution. These radical polymerizations are preferably carried out under oxygen-free deoxidation conditions.

As an example of the anionic polymerization, a method may be used in which a (meth)acrylic compound is dissolved in a solvent such as THF(tetrahydrofuran) and reacted using a strong base such as organic lithium compounds, organic sodium compounds or the Grignard reagent as an initiator. Alternatively, this polymerization can be converted to living anionic polymerization by optimizing the initiator or reaction temperature thereby controlling the molecular weight distribution. These anionic polymerizations are carried out under strict dry and oxygen-free conditions.

The weight average molecular weight of the side chain polymeric liquid crystalline compound is preferably from 1,000 to 200,000, particularly preferably from 3,000 to 50,000. The weight average molecular weight deviating from these ranges is not preferable because the resulting liquid crystal layer would be insufficient in strength or poor in alignability.

The liquid crystalline composition of the present invention preferably comprises a dioxetane compound represented by the formula

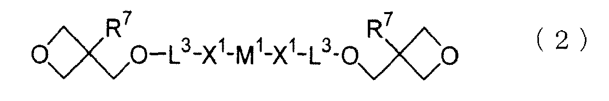

In formula (2), each R⁷ is hydrogen, methyl, or ethyl, each L³ is a single bond, -(CH₂)ₙ- wherein n is an integer of 1 to 12, each X¹ is a single bond, -O-, -O-CO-, or -CO-O-, M¹ is represented by formula (3) or (4) below wherein each P¹ is a group selected from those represented by formula (5) below and P² is a group selected from those represented by formulas (5) and (6), and each L⁴ is a single bond, -CH=CH-, -C≡C-, -O-, -O-CO-, or -CO-O-

-P¹-L⁴-P²-L⁴-P¹- (3)

-P¹-L⁴-L⁴-P¹- (4)

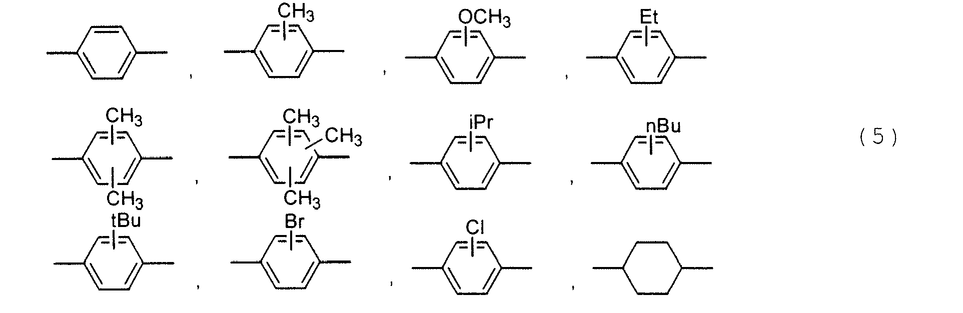

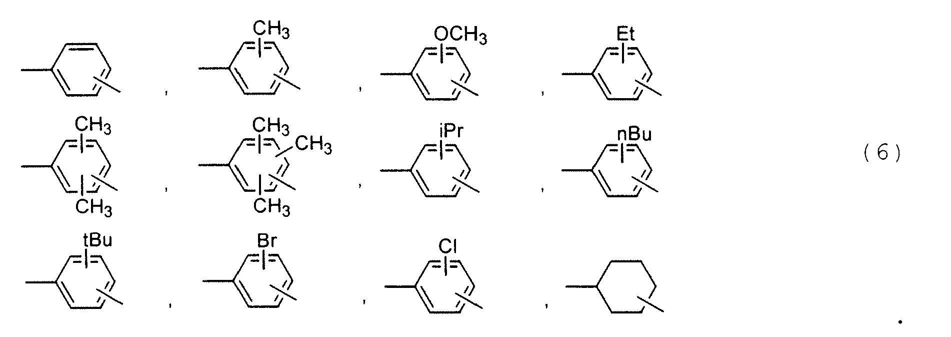

In formulas (5) and (6), Et, iPr, nBu, and tBu are each ethyl, isopropyl, n-butyl and tert-butyl, respectively.

More specifically, the dioxetane compound represented by formula(2) has interconnecting groups coupling the M¹ group to the oxetanyl groups positioned on the right and left sides thereof which interconnecting groups may be different from one another (non-symmetric) or the same (symmetric). The dioxetane compound may not exhibit liquid crystallinity when two L³ are different from one another or depending on the structure of other connecting groups. However, the use of the dioxetane compound is not restricted.

There are many compounds that can be exemplified as compounds represented by formula (2) because of variation in combination of M¹, L³, and X¹. However, preferable examples include the following compounds:

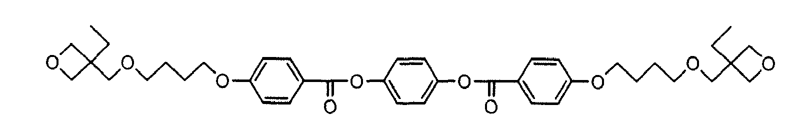

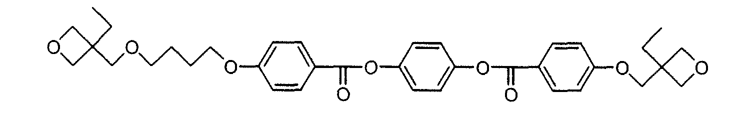

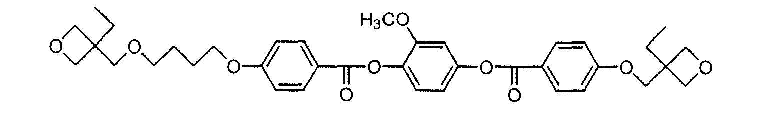

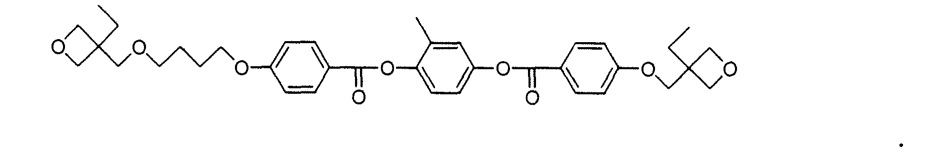

There is no particular restriction on the method of synthesizing these compounds because they can be synthesized in accordance with any conventional method utilized in the field of organic chemistry.

The conditions for synthesizing the oxetanyl compounds should be carefully selected because the compounds suffer side reactions such as polymerization and/or ring-opening reaction under strong acidic conditions since the oxetanyl groups have cationic polymerizability.

The oxetanyl groups are, however, less potential to induce such side reactions, compared with oxylanyl group, which is a similar cationically polymerizable functional group. Furthermore, since the oxetanyl group may allow various compounds similar thereto, such as alcohols, phenols, and carboxylic acids to initiate reaction with one another, the use of protecting groups may be recommended.

More specific examples of the synthesis methods include those wherein hydroxybenzoic acid used as the starting material is bonded to oxetanyl groups with the Williamson ether synthesis and then the resulting compound is bonded to a diol suitable for the present invention with an acid chloride method or condensation with carbodiimide and wherein hydroxybenzoic acid is condensed with a diol suitable for the present invention after protecting the hydroxyl group with an appropriate protecting group and then the hydroxyl group is reacted with a proper compound having an oxetanyl group (oxetane compound) such as haloalkyloxetane after the protection group is removed.

Reaction between the oxetane compound and the hydroxyl group may be carried out under suitable conditions depending on the structures or reactivity of the compounds to be used. Generally, the reaction temperature is from -20 to 180°C, preferably from 10 to 150°C while the reaction time is from 10 minutes to 48 hours, preferably from 30 minutes to 24 hours. The conditions out of the foregoing ranges are not preferable because the reaction would not proceed sufficiently or side reactions would occur. The mixing ratio of the oxetane compound and the hydroxyl group is preferably from 0.8 to 1.2 equivalent of oxetane compound per equivalent of hydroxyl group.

The reaction may be carried out without using a solvent but is usually carried out in the presence of a solvent. There is no particular restriction on the solvent as long as it does not bother the intended reaction. Examples of the solvent include aromatic hydrocarbons such as benzene, toluene and xylene; amides such as dimethylformamide, dimethylacetoamide and N-methylpyrorridone; ketones such as methyl ethyl ketone and methyl isobutyl ketone; ethers such as dibutyl ether, ethylene glycol dimethyl ether and diethylene glycol dimethyl ether; esters such as ethyl acetate and ethyl benzoate; halogenated hydrocarbons such as chloroform and dichloromethane; and mixtures thereof.

The liquid crystalline composition used in the present invention comprises 10 percent by mass or more, preferably 30 percent by mass or more, more preferably 50 percent by mass or more of the above-described low molecular weight liquid crystalline compound or polymeric liquid crystalline compound and exhibits liquid crystallinity. When the content of the low molecular weight liquid crystalline compound or polymeric liquid crystalline compound is less than 10 percent by mass, it is not preferably because the proportion of the compound exhibiting liquid crystallinity would be too low for the composition to exhibit liquid crystallinity.

As described above, in addition to the low molecular weight liquid crystalline compound or polymeric liquid crystalline compound, the liquid crystalline composition may contain various compounds that are miscible therewith without impairing its liquid crystallinity. Examples of such compounds include various polymerizable compounds having a radically polymerizable group such as vinyl or (meth)acryloyl group, or a cationically polymerizable group such as oxetanyl, oxiranyl or vinyloxy group, compounds having a reactive group such as carboxyl, amino or isocyanato group, and various polymeric compounds having a film formation capability. As described above, the composition may contain a surfactant, a defoaming agent, and a leveling agent and if a compound, low molecular weight or polymeric compound having a reactive functional group is used, the composition may further contain a reaction initiator, an activating agent or a sensitizer that is adopted to each of the functional groups to an extent that achievement of the object of the present invention is not deviated.

The liquid crystalline composition having a reactive group is provided with a desired alignment and then allowed to react under suitable conditions reacted under conditions so as to enhance the mechanical strength of the intended final product due to cross-linking or an increase in molecular weight.

The above-mentioned polymerizable compounds are preferably compounds that can improve the workability or adhesivity of the resulting liquid crystal film possibly in the next processing step, particularly preferably (meth)acrylates having an oxetanyl group. Examples of such (meth)acrylates include those represented by the following formulas:

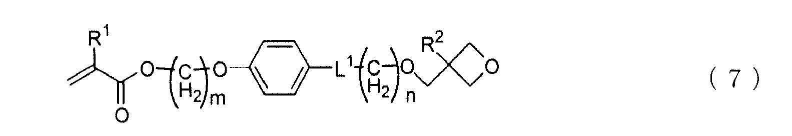

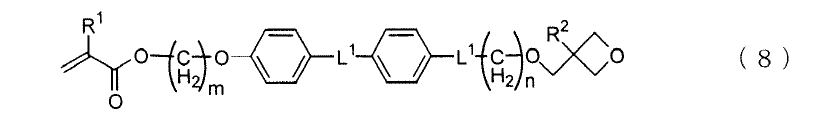

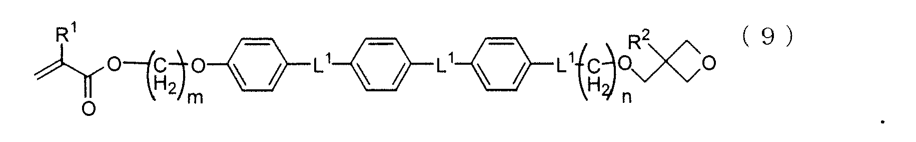

In formulas (7), (8) and (9), each R¹ is hydrogen or methyl, each R² is hydrogen, methyl or ethyl, L¹ is a single bond, -O-, -O-CO-, or -CO-O-, each m is an integer of 1 to 10, and each n is an integer of 0 to 10.

Various specific compounds corresponding to formulas (7), (8) and (9) can be exemplified but need not have liquid crystallinity. More specifically, particularly preferred are the following compounds.

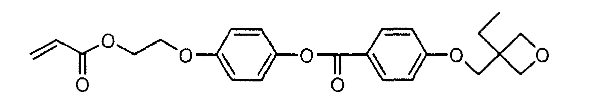

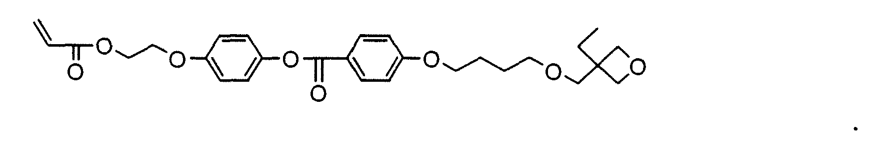

There is no particular restriction on a method for synthesizing these (meth)acrylates having an oxetanyl group. Therefore, any conventional method utilized in the field of organic chemistry may be used.

For example, a portion having an oxetanyl group is bonded to a portion having a (meth)acryloyl group by means of the Williamson's ether synthesis or an ester synthesis using a condensing agent thereby synthesizing a (meth)acrylic compound having two different reactive functional groups, i.e., an oxetanyl group and a (meth)acryloyl group. The conditions for synthesizing the oxetanyl compounds should be carefully selected because the compounds suffer side reactions such as polymerization and/or ring-opening reaction under strong acidic conditions since the oxetanyl groups have cationic polymerizability. These reaction conditions may be selected from those described in detail with respect to the synthesis of a compound of formula (2) described above.

Examples of the above-mentioned reaction initiator include organic peroxides and various photo polymerization initiators that have been used for conventional radical polymerization.

Examples of the photo-polymerization initiator include photo-radical initiators that are split with a suitable light to generate radicals and photo-cation generators that are split with a suitable light to generate cations. If necessary, a thermal cation generator may be used which can generate cations by being heated to an appropriate temperature.

Examples of the photo radical initiator include conventional ultraviolet (UV) curing type coatings, UV adhesives, commercially available benzoinethers, acylphosphines, triazine derivatives, and imidazole derivatives that are used in negative resists.

Examples of the photo cation generator include organic sulfonium salt-, iodonium salt-, and phosphonium salt-based compounds. Counter ions of these compounds are preferably antimonate, phosphate, and borate. Specific examples of the generator include Ar₃S⁺SbF₆⁻, Ar₃P⁺BF₄⁻, and Ar₂I⁺PF₆⁻ wherein Ar indicates a phenyl or substituted phenyl group. Sulfonic acid esters, triazines, diazomethanes, β-ketosulfones, iminosulfonates, and benzoinsulfonates may also be used.

Examples of the thermal cation generator include benzylsulfonium salts, benzylammonium salts, benzylpyridinium salts, benzylphosphonium salts, hydrazinium salts, carbonic acid esters, sulfonic acid esters, amineimides, antimony pentachloride-acetyl chloride complexes, diaryliodonium salt-dibenzyloxy coppers, and halogenated boron-tertiary amine adducts.

Since the amount of these reaction initiators to be added in the liquid crystalline composition varies depending on the structures or molecular weight of mesogen or spacer portion constituting the liquid crystalline compound to be used, or the conditions of aligning the liquid crystalline composition, it can not be determined with certainty. However, the amount is within the range of usually 100 ppm by mass to 20 percent by mass, preferably 1,000 ppm by mass to 10 percent by mass, more preferably 0.5 percent by mass to 8 percent by mass, on the basis of the mass of the liquid crystalline compound. An amount of the reaction initiator of less than 100 ppm by mass is not preferable because polymerization may not progress due to the insufficient amount of active species to be generated from the reaction initiator. An amount of the reaction initiator of more than 20 percent by mass is not also preferable because most of the reaction initiator that remains undecomposed in the liquid crystalline composition may cause coloration of the composition and decrease in light resistance of the composition.

Hereinafter, description will be given of a method for forming a homeotropically aligned liquid crystal layer. However, the method is not limited to this exemplified method.

First, the liquid crystalline composition used in the present invention is spread over the above-described substrate with an alignment film (alignment film substrate) as described above.

Examples of the method of forming a liquid crystal layer by spreading the liquid crystalline composition over the alignment substrate include a method wherein the liquid crystalline composition in a molten state is directly coated over the alignment film substrate or a method wherein a solution of the liquid crystalline composition is coated over the alignment film substrate and dried to evaporate the solvent.

There is no particular restriction on the solvent used to prepare the solution as long as it can dissolve various compounds used in the liquid crystalline composition and be evaporated under appropriate conditions. Preferable examples of the solvent include ketones such as acetone, methyl ethyl ketone, isophorone, and cyclohexanone; ether alcohols such as butoxy ethyl alcohol, hexyloxy ethyl alcohol, and methoxy-2-propanol; glycol ethers such as ethylene glycol dimethylether and diethylene glycol dimethyl ether; esters such as ethyl acetate, ethyl lactate and γ-butyrolactone; phenols such as phenol and chlorophenol; amides such as N,N-dimethylformamide, N,N-dimethylacetoamide, and N-methylpyrrolidone; halogenated solvents such as chloroform, tetrachloroethane, and dichlorobenzene; and mixtures thereof. Surfactants, defoaming agents, or leveling agents may be added to the solution so as to form a uniform film layer on an alignment film substrate.

Regardless of whether the liquid crystalline composition is coated directly or in the form of a solution, there is no particular restriction on the method of coating the liquid crystalline composition as long as the uniformity of the coated film can be maintained, and thus any conventional method may be used. Examples of the method include flexographic printing, offset printing, dispensing, gravure coating, kiss coating, bar coating, micro gravure, screen printing, lip coating, and die coating methods. Amongst, preferable examples include gravure coating, kiss coating, lip coating, and die coating methods.

The coating of a solution of the liquid crystalline composition is preferably followed by a drying step for removal of the solvent after coating. There is no particular restriction on the drying step as long as it can maintain the uniformity of the coated film, which may be any conventional method. For example, a method using a heater (furnace) or a hot air blowing may be used.

The thickness of the coated film can be varied depending on the liquid crystalline composition to be used or the usage of the homeotropically aligned liquid crystal layer. However, the thickness after drying is from 0.1 µm to 20 µm, preferably from 0.3 µm to 10 µm. Since the liquid crystalline composition used in the present invention exhibits a refractive index anisotropy by being aligned, it would not be sufficient to define the coated film thickness only by its physical thickness and thus the film thickness is often preferably specified by the retardation value Rth in thickness direction defined by Rth=((nx+ny)/2-nz)xd wherein the refractive indices in the plane direction of the homeotropically aligned liquid crystal layer are nx and ny (nx≥ny), the refractive index in the thickness direction is nz, and the thickness is d (nm). In such a case, the Rth is from -1000 to -10 nm, preferably from -600 to -20 nm. A film of which thickness and/or Rth value are out of the above mentioned ranges is not preferable because such a film would fail to obtain desirable effects and/or align the composition insufficiently.

The liquid crystal layer formed on the alignment film substrate is aligned in a liquid crystal state by a heat treatment or the like and then if necessary cured by photo-irradiation and/or a heat treatment so as to react the reactive group thereby fixing the alignment. During the first heat treatment, the liquid crystalline composition is heated to a temperature in such a range that the liquid crystalline composition exhibits a liquid crystal phase, so as to be aligned by its peculiar self-alignability. Since the conditions for the heat treatment vary in optimum conditions and limits depending on the liquid crystal phase behavior temperature (transition temperature) of the liquid crystal material to be used, it can not be determined with certainty. However, the heat treatment is conducted at a temperature within the range of usually 10 to 300°C, preferably 30 to 250°C, more preferably at a temperature higher than the Tg of the liquid crystalline composition, more preferably at a temperature higher by 10°C or higher than the Tg of the liquid crystalline composition. A too low temperature is not preferable because there is a possibility that the liquid crystalline composition may not be aligned sufficiently, while a too high temperature is not also preferable because the liquid crystalline composition and/or the alignment film substrate may be damaged. The heat treatment is conducted for usually 3 seconds to 30 minutes, preferably 10 seconds to 10 minutes. A heat treatment for shorter than 3 seconds is not preferable because aligning of the liquid crystalline composition may not be completed. Whereas, a heat treatment for longer than 30 minutes is not also preferable because the productivity is diminished.

After the liquid crystal layer is aligned by the above-described method and when the liquid crystalline composition having a reactive group is used, the composition is allowed to exhibit the function of the reaction initiator contained therein and to react the reactive group while kept in the aligned state so as to fix the alignment and enhance the mechanical strength.

In the case where the reaction initiator exhibits the function thereof by irradiation of light, the light irradiation is carried out by irradiating a light from a light source having a spectrum in an absorption wavelength region of the initiator to be used, such as a metal halide lamp, a high-pressure mercury lamp, a low-pressure mercury lamp, a xenon lamp, an arc discharge lamp, and a laser so as to activate the reaction initiator. The irradiation dose per cm² defined by integrated irradiation dose is within the range of generally 1 to 2,000 mJ, preferably 10 to 1,000 mJ. However, when the absorption region of the reaction initiator is extremely different from the spectrum of the light source, or the liquid crystalline composition itself can absorb a light in the wavelength of the light source, the irradiation dose is not limited to the above range. In these cases, a method may be employed in which a suitable photo sensitizer or two or more types of photo-cation generators having different absorption wavelengths may be used.

The temperature upon light irradiation is preferably within such a range that the liquid crystalline composition is aligned in a liquid crystal phase. Furthermore, the light irradiation is preferably conducted at a temperature which is equal to or higher than the Tg of the liquid crystalline composition, in order to enhance the efficiency of the curing sufficiently. Consequently, a homeotropically aligned liquid crystal layer is formed on an alignment film substrate.

Next, description will be given of a step of transferring the liquid crystal layer, which step may be added if necessary.

In the case where there arise problems that the alignment film substrate to be used is not optically isotropic or transparent at a wavelength region where the resulting liquid crystal layer is used, or the alignment film substrate is so thick that it causes a problem in practical use, the liquid crystal layer may be transferred from the alignment film substrate to a substrate that is different therefrom such as an optically isotropic substrate, a substrate that is transparent at a wavelength region where the resulting liquid crystal layer is intended to be used, or a film for supporting temporarily the liquid crystal layer until the layer is attached to a liquid crystal cell substrate.

The transferring method may be any conventional method. For example, as disclosed in Japanese Patent Laid-Open Publication Nos. 4-57017 and 5-333313, a method may be used in which after a substrate different from the alignment substrate is laminated via a tacky adhesive or adhesive over a liquid crystal layer on the alignment film substrate, the tacky adhesive or adhesive is cured if necessary and then only the alignment film substrate is released from the laminate so that the liquid crystal layer is transferred to the different substrate.

Examples of the substrate that is different from the alignment film substrate include triacetyl cellulose films such as Fujitac (manufactured by Fuji Photo Film Co., Ltd.) and Konicatac (manufactured by Konica Minolta Opto, Inc.); and transparent films such as TPX film (manufactured by Mitsui Chemical Inc.), Arton film (manufactured by JSR), Zeonex film and ZEONOR film (both manufactured by Zeon Corp.), and Acryplene film (manufactured by Mitsubishi Rayon Co., Ltd.). Polyethylene terephthalate films treated with silicone or provided on its surface with an easy releasable layer may also be used as temporarily supporting films. If necessary, films provided with a retardation function by stretching, various retardation films containing an aligned liquid crystal material layer, polarizing elements and polarizers, and various glasses may be used.

Examples of the films with a retardation function include those produced by stretching uniaxially or biaxially polymer films. Examples of the various retardation films containing an aligned liquid crystal material layer include coated aligned films of liquid crystalline polymers.

The polymer films to be stretched uniaxially or biaxially are preferably those having a smooth surface and high transmissivity and may be films or sheets formed from organic polymer materials. Examples of the polymer films include transparent polymers such as polyvinyl alcohols, polyimides, polyphenylene oxides, polyetherketones, polyetheretherketones, polyester-based polymers such as polyethylene terephthalates and polyethylene naphthalates, cellulose-based polymers such as diacetyl cellulose and triacetyl cellulose, polycarbonate-based polymers, and acryl-based polymers such as polymethyl methacrylates. Another examples include films formed from transparent polymers such as styrene-based polymers such as polystyrene and acrylonitrile styrene copolymers, olefin-based polymers such as polyethylenes, polypropylenes, polycycloolefins and ethylene propylene copolymers, vinyl chloride-based polymers, and amide-based polymers such as nylon and aromatic polyamides. Another examples include films formed from transparent polymers such as sulfone-based polymers, polyether sulfone-based polymers, vinylidene chloride-based polymers, vinyl butyral-based polymers, arylate-based polymers, polyoxymethylene-based polymers, epoxy-based polymers, and blends of these polymers. Amongst, plastic films such as triacetyl cellulose, polycarbonates, and polycycloolefins that are used as optical films are preferably used. Plastic films formed from polymer substances having a cyclic structure such as ZEONOR film and Zeonex film (both manufactured by Zeon Corp.) and Arton film (manufactured by JSR) are also suitably used as the films formed from organic polymer materials. Retardation films produced by stretching the above-mentioned films uniaxially or biaxially or produced using a technique as disclosed in Japanese Patent Application Laid-Open Publication No. 5-157911
wherein the retardation in the stretched direction is decreased using a heat-contractive film, and polymer films disclosed in Japanese Patent Application Laid-Open Publication No. 2001-343529 also exhibit excellent optical characteristics. The above-mentioned polymer films may be extrudes of the above-mentioned resin compositions.

Examples of the coated aligned films of liquid crystalline polymers include those produced by heating liquid crystalline polymers exhibiting a uniform monodomain nematic alignability and capable of fixing the alignment easily on a substrate or a substrate coated with a alignment film so as to allow the polymers to form a uniform monodomain nematic structure and then cooling the polymers to be fixed in the alignment without impairing the alignment in the liquid crystal state. It is preferable to use a nematically alignable liquid crystalline composition containing a photo polymerizable liquid crystalline compound so that the retardation film formed from the above-described liquid crystalline polymers is provided with durability sufficient to be used in a liquid crystal display device. The nematically alignable liquid crystalline composition is subjected to irradiation of light such as ultraviolet ray after being aligned.

There is no particular restriction on the tacky adhesive or adhesive to be used to transfer the liquid crystal layer (hereinafter collectively referred to as "tacky/adhesive") as long as it is of optical grade. Examples of the tacky/adhesive include acrylic-, epoxy resin-, ethylene-vinyl acetate copolymer-, rubber-, urethane-based adhesives, mixture types thereof, or various reactive adhesives of such as thermal curing type and/or photo curing type or electron radiation curing types. The reaction (curing) conditions under which the reactive tacky adhesives or adhesives are cured vary depending on their formulation, viscosity and reaction temperature thereof. Therefore, the curing may be carried out under the conditions properly selected. The photo curing type adhesive may be cured at a similar irradiation dose using a similar light source to those used to fix the above-described liquid crystalline composition with light. The electron radiation curing type adhesives may be cured at an accelerating voltage of usually 10 kV to 200 kV, preferably 20 kV to 100 kV.

The optical film thus produced in accordance with the present invention is preferably used as a viewing angle improving film for a liquid crystal display device.

There is no particular restriction on the liquid crystal display device for which the optical film is used. Examples of the liquid crystal display device include those of transmissive, reflective and transflective type. Examples of the liquid crystal alignment mode in a liquid crystal cell include TN, STN, VA (vertical alignment), MVA (multi-domain vertical alignment), OCB (optically compensated bend), ECB (electrically controlled birefringence), HAN (hybrid-alignednematic), and IPS (in-plane switching) modes. The liquid crystal alignment may have a single orientation or divided in a cell surface. When the liquid crystal display device for which the optical film may be used is classified by its driving mode, examples thereof include passive modes using ITO electrodes and active modes using TFT (Thin Film Transistor) electrodes and TFD (Thin Film Diode) electrodes.

### [Applicability in the Industry]

An optical film with excellent optical qualities can be produced in accordance with the present invention and thus has a significant in industrial value.

### [Examples]

The present invention will be further described in the following examples and comparative examples, but the present invention should not be construed as being limited thereto.

The analyzing methods used in the examples and comparative examples will be described below.

### (1) Measurement of molecular weight

The molecular weight of a liquid crystalline composition was measured by dissolving a compound in tetrahydrofuran used as the eluent using 8020 GPC system manufactured by TOSOH CORPORATION equipped with TSK-GEL, Super H1000, Super H2000, Super H3000, and Super H4000 which are connected in series. Polystyrene was used as a standard for calibration of the molecular weight.

### (2) Measurement of solid content

A PVA solution in an aluminum tray was weighed then placed in a HT310S oven, manufactured by ETAC, to remove the solvent under air at 107°C for 3 hours. The aluminum tray was weighed again, and the solid content of the PVA solution was determined by the weight difference gave.

### (3) Observation through Microscope

A liquid crystal aligned state was observed using an Olympus BH2 polarizing microscope.

### (4) Parameter measurement of optical film

The retardation value Rth of an optical film in the thickness direction was determined by examining the dependence on the incident light angle of the retardation of the film using an automatic birefringence analyzer (KOBRA21ADH) manufactured by Oji Scientific Instruments.

### (5) Evaluation of transferability and Measurement of peel strength

The transferability of a liquid crystal layer was evaluated with the peel strength between a liquid crystal layer and an alignment film layer after transfer. The peel strength was measured by a 180° peel test wherein the layer was peeled at a speed of 300 mm/min in accordance with JIS K6854 using a Strograph E-L manufactured by Toyo Seiki Seisaku-sho, LTD. The appearance of the peeled surface was visually evaluated.

### [Reference Example 1]

### (Preparation of PVA solution)

Into a stainless steel 500 L bath equipped with a reflux condenser and a stirrer were charged 16.00 kg of PVA (JL-18E, manufactured by JAPAN VAM & POVAL CO., LTD., saponification degree: 83 to 86%, average polymerization degree: 1800) and 307.20 kg of deionized water (electric conductivity: 1 µS/cm or less). The mixture was heated and stirred at 95°C for 3 hours to dissolve the PVA and then cooled to 70°C. To the resulting solution were added gradually 76.8 kg of isopropyl alcohol (manufactured by Kanto Kagaku, Shika-first grade, purity: 99% or more). The mixture was stirred at 65°C to 70°C for 2 hours thereby producing a homogeneous clear solution.

The solution was cooled to room temperature, and then was filtered to remove the resulting particles at a filtration rate of 10 kg/min using a cartridge filter (ADVANTEC TCP-JX-S1FE (1 µm)) that can capture particles of an average diameter of 1 µm thereby producing 350 kg of a solution with a solid content of about 4 percent by mass.

### [Reference Example 2]

A PVA solution was prepared using MP-203 (manufactured by KURARAY CO., LTD., saponification degree: 87 to 89%, average polymerization degree: 300) with the same procedures of Reference Example 1.

### [Reference Example 3]

A PVA solution was prepared using JM-17 (manufactured by JAPAN VAM & POVAL CO., LTD., saponification degree: 95.5 to 97.5%, average polymerization degree: 1700) with the same procedures of Reference Example 1.

### [Reference Example 4]

A PVA solution was prepared using PVA-505 (manufactured by KURARAY CO., LTD., saponification degree: 72.5 to 74.5%, average polymerization degree: 500) with the same procedures of Reference Example 1.

### [Reference Example 5]

A PVA solution was prepared by mixing the PVA solutions of Reference Examples 1 and 3 at a mass ratio of 0.5:9.5.

### [Reference Example 6]

A PVA solution was prepared by mixing the PVA solutions of Reference Examples 1 and 3 at a mass ratio of 0.05:9.95.

### [Reference Example 7]

A liquid crystalline composition solution used to produce an optical film was prepared as follows.

A liquid crystalline polymer represented by formula (10) below was synthesized through the conventional radical polymerization. The molecular weight of the polymer was 8000 of the number average molecular weight (Mn), and 15000 of the weight average molecular weight (Mw), in terms of polystyrene.

In 1800 ml of cyclohexanone were dissolved 200.0 g of the liquid crystalline polymer. To the resulting solution were added 20 g of a propylene carbonate solution of 50 percent of triarylsulfonium hexafluoroantimonate (a reagent manufactured by Aldrich Co.) at a dark place. The mixture was filtered with a polytetrafluoroethylene filter with a pore size of 0.45 µm thereby producing a liquid crystalline composition solution.

Although formula (10) below are shown as the block copolymer form, the numbers shows the monomer ratio (molar ratio) upon polymerization.

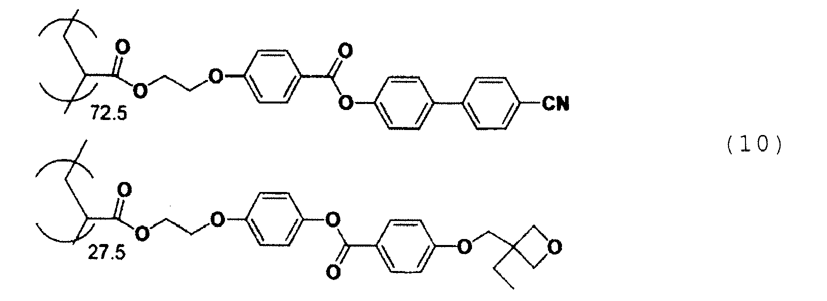

### [Examples 1 to 3 and Comparative Examples 1 to 3]

### (Formation of alignment film)

Each of the PVA solutions of Reference Examples 1 to 6 was continuously coated at room temperature on a PEN (polyethylene naphthalate) film (Q51 manufactured by Teijin Dupont Films Japan Ltd.) with a width of 650 mm and a length of 1000 m with a gravure coater so that the dried coated film thickness was about 1 µm. The coated film was successively dried with hot-air convection dryers set at 50°C, 70°C, 90°C and 130°C, respectively thereby producing an elongate film with an alignment film.

### (Rubbing treatment)

While the elongate film with an alignment film produced above was conveyed at a speed of 20 m/min on an apparatus as shown in Fig. 1, the film surface was rubbed with a 150 mm diameter rubbing roller wrapped with a rubbing cloth placed at an angle of 45 degrees with respect to the MD of the film so that bristle tips of the rubbing cloth is pushed into the film surface at a depth of 500 µm and rotated at 170 rpm (peripheral velocity ratio 4) and then rolled up on a roller.

### (Production of optical film)

The liquid crystalline composition solution of Reference Example 7 was coated on the elongate film having been subjected to the above rubbing treatment with a roll coater so that the thickness of the liquid crystalline composition layer after being aligned and cured was about 1 µm, and then dried at 60°C and then heated at 120°C for 2 minutes to be aligned. The aligned liquid crystalline composition layer was fixed in the alignment by irradiating an ultraviolet light of 300 mJ/cm² with an ultraviolet irradiation device equipped with a high pressure mercury lamp placed at the ambient atmosphere kept at 70°C and then cooled to room temperature thereby producing an alignment substrate having the liquid crystal layer thereon.

Since the PEN film substrate exhibits optical anisotropy, the liquid crystal layer was transferred via an acrylic adhesive onto a triacetyl cellulose (TAC) film in the following manner.

A commercially available ultraviolet curing type adhesive (UV-3400 manufactured by Toagosei Co., Ltd.) was coated on the resulting liquid crystal layer on the alignment film substrate described above so that the adhesive layer thickness was 5 µm, and then laminated with the TAC film. After the laminate was subjected to an irradiation of ultraviolet light from the TAC film side so as to cure the adhesive, the PEN and the alignment film layer were peeled off thereby producing an optical film (homeotropically aligned liquid crystal layer/adhesive layer/TAC film).

The resulting optical film was examined in respect of the aligned state, presence of defects, optical characteristics and peel strength when the PEN film and alignment film layer were peeled off from the liquid crystal layer(2.5 mm width).

The alignment of each of the optical film was determined as follows. The optical film was determined as being aligned homeotropically in case where it was observed using a crossed nicols polarizing microscope that the alignment of the optical film was monodomain having no disclination and observed using a conoscope that the film was optically positive uniaxial.

The optical film was determined as being aligned homogeneously in case where it was observed that the optical film had an extinction position when the rubbed direction was aligned with one of the upper or lower polarizing elements, and otherwise observed that light was transmitted, using a crossed nicols polarizing microscope.

The results are set forth in Table 1 below.

**Table 1**

| | PVA solution | Aligned state | Number of defects /m² | Type of main defect | Rth nm | Peel strength N/m |
|---|---|---|---|---|---|---|
| Example 1 | Reference Example 1 | Homeotropic excellent | 2 | PVA residue (little) | -150 | 2 |
| Example 2 | Reference Example 2 | Homeotropic excellent | 8 | PVA residue | -140 | 2 |
| Example 3 | Reference Example 5 | Homeotropic excellent | 1 | PVA residue (little) | -140 | 3 |
| Comparative Example 1 | Reference Example 3 | Homogeneous | 48 | poor peeling (much) | 60 | 46 |
| Comparative Example 2 | Reference Example 4 | Homeotropic excellent | 62 | PVA residue (much) | -140 | 2 |
| Comparative Example 3 | Reference Example 6 | Homogeneous | 27 | poor peeling (much) | 50 | 31 |

### [Example 4]

### (Formation of alignment film)

After a TAC (triacetyl cellulose) film (Fujitac, manufactured by Fuji Photo Film Co., Ltd.) with a width of 650 mm and a length of 1000 m was subjected to a corona discharge treatment (100 W·min/m²), the PVA solution of Reference Example 1 was continuously coated on the TAC film at room temperature with a gravure coater so that the dried coated film thickness was about 1 µm. The coated film was successively dried with hot-air convection dryers set at 50°C, 70°C, and 90°C, respectively, thereby producing an elongate film with an alignment film.

### (Production of optical film)

Similarly to Example 1, the liquid crystalline composition solution of Reference Example 7 was coated on the elongate film having been subjected to the above rubbing treatment with a roll coater so that the thickness of the liquid crystalline composition after being aligned and cured was about 1 µm, and then dried at 60°C and heated at 120°C for 2 minutes to be aligned. The resulting liquid crystalline composition layer was fixed in the alignment by irradiating an ultraviolet light of 300 mJ/cm² with an ultraviolet irradiation device equipped with a high pressure mercury lamp at the ambient atmosphere kept at 70°C and then cooled to room temperature thereby producing an optical film (homeotropically aligned liquid crystal layer/alignment film layer/TAC film).

The results of evaluation of the optical film were similar to those of Example 1 except for the peel strength.

### [Example 5]

### (Preparation of elliptical polarizer)

A commercially available ultraviolet curing type adhesive (UV-3400 manufactured by Toagosei Co., Ltd.) was coated on the resulting liquid crystal layer on the alignment film substrate produced in Example 1 so that the adhesive layer thickness was 5 µm, and then laminated with a ZEONOR film with a in-plane retardation of 140 nm. After the laminate was subjected to an irradiation of ultraviolet light from the ZEONOR film side so as to cure the adhesive, the PEN film and the alignment film layer were peeled off thereby producing a laminate composed of homeotropically aligned liquid crystal layer/adhesive layer/ZEONOR film.

The homeotropically aligned liquid crystal layer was attached via a tacky adhesive on a polarizing element of a polarizer, the other surface of which was protected with a TAC film thereby producing an elliptical polarizer.

### (Production of IPS type liquid crystal display device)

The elliptical polarizer was arranged in a commercially available IPS type liquid crystal television wherein a backlight, a backlight-side polarizer, an IPS type liquid crystal cell, and a viewing-side polarizer are laminated in this order, in place of the viewing side polarizer. It was confirmed that the viewing angle was enlarged and a more excellent image was provided even when the television was viewed obliquely, compared with an IPS type television without the elliptical polarizer.

### [Brief Description of the Drawing]

Fig. 1 is a plan view showing an apparatus that rubs an alignment substrate in the form of an elongate film at an arbitrary angle with respect to the MD.

### (Description of Numerals)

10 rubbing roller
11 stage for conveying an alignment substrate
12 alignment substrate in the form of elongate film

## Claims

1. A method for manufacturing an optical film comprising the steps of:
forming an alignment film over a substrate; and
forming over the alignment film a liquid crystal layer fixed in a homeotropic alignment,
the alignment film comprising at least polyvinyl alcohol with a saponification degree of 75 to 90 percent.

2. The method for manufacturing an optical film according to claim 1, further comprising the step of transferring the liquid crystal layer on another substrate.

3. The method for manufacturing an optical film according to claim 1 or 2, wherein the alignment film comprises a polyvinyl alcohol with a saponification degree of 75 to 90 percent and a polyvinyl alcohol with a saponification degree of 90 or greater, mixed at a ratio of 0.1:9.9 to 10:0.

4. The method for manufacturing an optical film according to any of claims 1 to 3, wherein the average polymerization degree of the polyvinyl alcohol is from 300 to 3000.

5. The method for manufacturing an optical film according to any of claims 1 to 4, wherein the substrate over which the alignment film is formed is a plastic film.

6. An optical film manufactured by the method according to any one of claims 1 to 5.

7. A liquid crystal display device equipped with the optical film according to claim 6.
